# FASCICULE DE BREVET EUROPEEN

(11) **EP 0 624 465 B1**
(45) Date de publication et mention de la délivrance du brevet: **20.05.1998**
(21) Numéro de dépôt: 94400668.3
(22) Date de dépôt: 29.03.1994
(51) Int. Cl.: B32B 31/00, B29C 65/18

(54) **Dispositif de prescellage d'un document sur un bande plastique**
Vorrichtung zum zeitweiligen Verschweissen von Dokumenten auf einer Kunststoffbahn
Apparatus for temporarily sealing documents onto a plastic web

(30) Priorité: 02.04.1993 FR 9303898
(43) Date de publication de la demande: 17.11.1994
(73) Titulaire: IDMATICS S.A., F-78401 Chatou (FR)
(72) Inventeur: Tisserand, Georges, F-92402 Courbevoie Cedex (FR); Tisserand, Jacques, F-92402 Courbevoie Cedex (FR)
(74) Mandataire: Benoit, Monique

(56) Documents cités:
- EP-A- 0 097 598
- EP-A- 0 319 772
- EP-A- 0 356 221
- EP-A- 0 461 751
- WO-A-91/18816
- US-A- 3 556 899

## Description

La présente invention concerne un dispositif de préscellage d'un document sur une bande plastique. Elle s'applique notamment à la plastification de documents originaux tels que des cartes d'identité ou tout autres documents d'identification par exemple. Plus généralement, elle s'applique à la plastification de documents dont il est nécessaire de sauvegarder l'état pour des raisons de sécurités ou de fiabilité. EP-A-0097598 décrit un dispositif de préscellage d'un document sur une bande plastique et la plastification dudit document.

La qualité de plastification de documents d'identification participe notamment à la sécurité et à la fiabilité que doivent procurer ces derniers. Différents critères concourent à définir cette qualité. Parmi ceux-ci, la régularité des bords de plastique joue un rôle important. Il importe en effet que le document, une carte d'identification de forme rectangulaire par exemple, soit bien centré au milieu du rectangle de plastique le recouvrant, pour des raisons de reconnaissance automatique ou de fiabilité du document par exemple. A cet effet, quand le document est préalablement placé sur une bande en plastique, il doit être parfaitement positionné sur cette dernière, notamment par rapport à la ligne de découpe de l'ensemble constitué du document et de la bande en plastique, c'est-à-dire du document plastifié. En effet, la plupart des techniques de plastification consistent à dérouler une première bande en plastique sur laquelle est déposé le document à plastifier, l'ensemble étant ensuite recouvert d'une deuxième bande en plastique sur la face opposée du document à la première bande, les opérations suivantes consistant généralement à chauffer les bandes sur la surface du document pour les fixer définitivement puis à découper le document ainsi plastifié. Un bord en plastique est laissé autour du document ou la découpe est opérée juste au bord du document par exemple. Dans les deux cas, il est nécessaire de bien positionner le document sur la première bande en plastique par rapport à sa ligne de découpe notamment pour obtenir des bords réguliers. Or, entre la dépose du document sur la première bande en plastique et son passage au niveau de cette ligne de découpe ou du dispositif de chauffage des bandes fixant le document sur celles-ci, il y a un certain espacement, pour permettre par exemple le recouvrement du document par une deuxième bande en plastique. Cet espacement peut aussi être par exemple dû à l'encombrement des machines. Durant le trajet parcouru par un document sur la bande se déroulant, ce dernier risque donc de se déplacer sur la bande, donc de perdre sa position initiale et de se trouver mal positionné au moment du passage sous la ligne de découpe. En particulier, si plusieurs rangées de documents sont disposées sur la bande en plastique, ceux-ci risquent de se désaligner. Il est donc nécessaire de fixer le document sur la première bande en plastique au moment de sa dépose sur celle-ci. Cela permet notamment d'éviter que le document ne se déplace par la suite sur cette bande. Une fixation peut être obtenue par exemple par un point de chauffage ou par un point de colle sur la bande au niveau du document.

Dans le cas où de nombreux documents sont plastifiés à la suite, sur une ou plusieurs rangées, il est important notamment que le ou les points de fixation soient parfaitement positionnés par rapport au document pour éviter qu'une dérive de positionnement du point de fixation au fur et à mesure du défilement des documents aboutisse à ce que ce ou ces points de fixation se situent hors du document et donc que ces derniers ne soient pas fixés.

Le but de l'invention est de permettre un préscellage de documents sur une bande en plastique au moment de leur dépose sur celle-ci de façon à ce que la position des points de préscellage sur les documents reste parfaitement stable.

A cet effet, l'invention a pour objet un dispositif de préscellage d'un document sur une bande en plastique, caractérisé en ce qu'il comprend au moins:
- un premier cylindre sur lequel s'enroule le document à partir d'un premier point donné de l'espace tangent au cylindre ;
- des moyens de fixation de la bande en plastique en un deuxième point tangent au cylindre où la bande en plastique est en contact avec le document, ce point tangent faisant un angle constant avec le point donné de l'espace, le document étant préscellé par la fixation de la bande en plastique en ce deuxième point tangent.

L'invention a pour principaux avantages qu'elle est adaptée à des dispositifs plastifiant des documents en grande série, qu'elle est adaptée à tous types de documents, qu'elle est simple à mettre en oeuvre et qu'elle est économique.

D'autres caractéristiques et avantages de l'invention apparaîtront à l'aide de la description qui suit faite en regard des dessins annexés qui représentent:
- les figures 1a et 1b, des documents disposés sur une bande en plastique ;
- les figures 2, 3a, 3b et 4, des modes de réalisation possible d'un dispositif selon l'invention;
- la figure 5, une association possible d'un dispositif selon l'invention avec des moyens de plastification et de découpage de documents plastifiés.

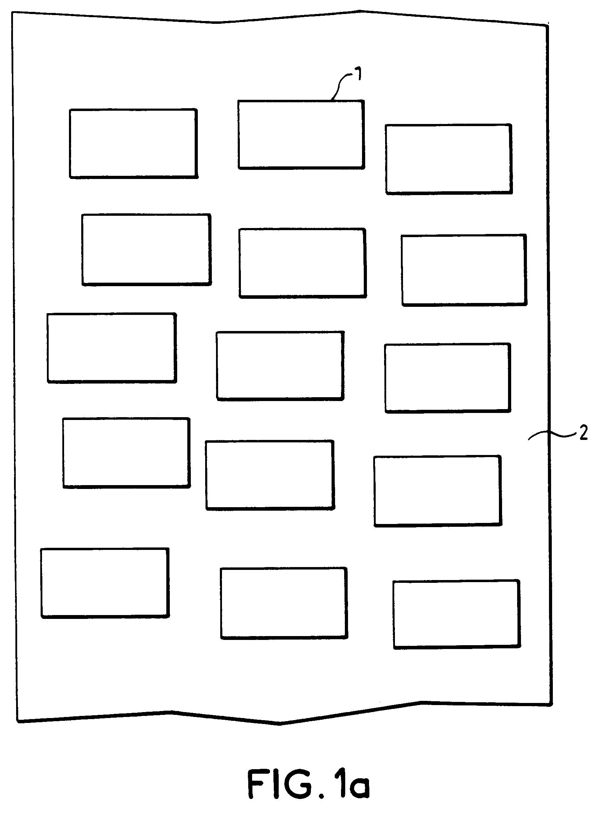

La figure 1a, présente des documents 1, en papier par exemple, à plastifier déposés sur une bande en plastique 2. L'ensemble est par exemple recouvert d'une deuxième bande en plastique puis défile par exemple sous des moyens de chauffage de ces bandes et sous des moyens de découpe des documents plastifiés. La figure 1a présente, à titre d'exemple, trois rangées de documents 1 désalignés car non préalablement fixés à la bande au moment de leur dépose sur celle-ci, ce désalignement étant par exemple dû au mouvement de la bande ou à l'environnement extérieur.

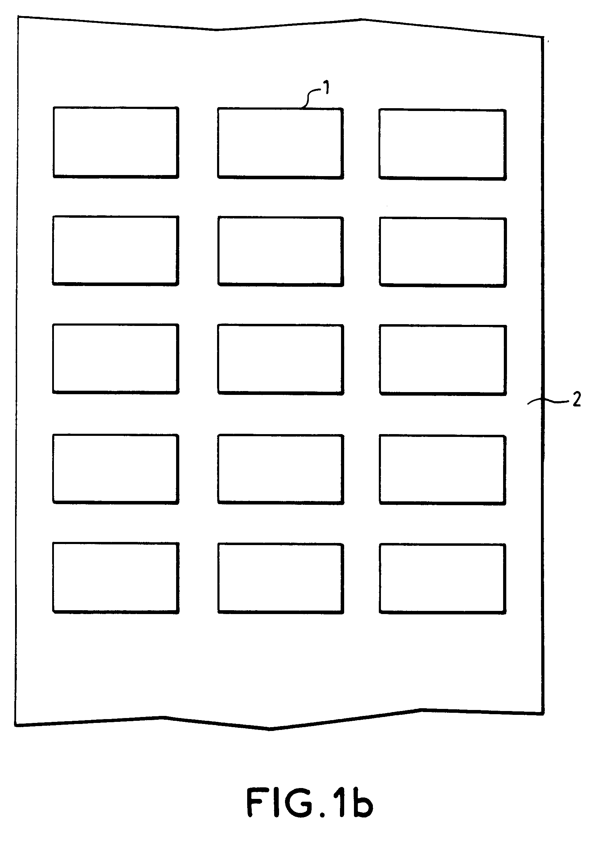

La figure 1b, présente des documents 1 convenablement alignés sur la bande en plastique 2, ceux-ci ayant été fixés sur la bande au moment de leur dépose sur celle-ci, au moyen de points de chauffage de la bande par exemple. En effet, la face d'adhérence de la bande, en polyéthylène par exemple, étant au contact du document se fixe à ce dernier quand elle atteint une température donnée, la face opposée de la bande, en polyester par exemple, n'étant sensible à la chaleur qu'à une température nettement supérieure à cette température donnée.

Les documents pourraient aussi être fixés par des points de collage par exemple.

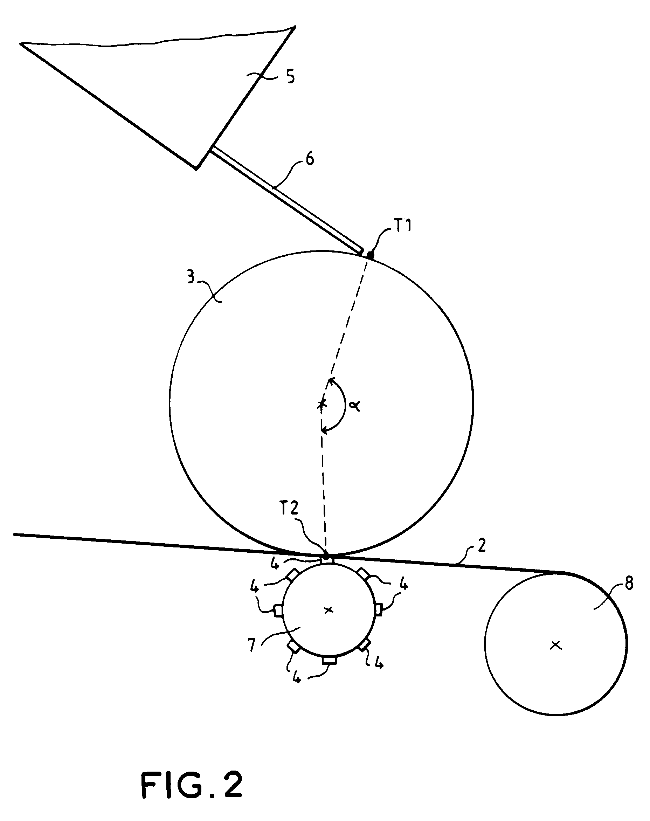

La figure 2, illustre un premier mode de réalisation possible d'un dispositif selon l'invention, lequel permet notamment de fixer les documents 1 précités au moment de leur dépose sur la bande en plastique 2. Le dispositif comprend au moins un premier cylindre 3 sur lequel s'enroule un document à partir d'un point T1 de l'espace tangent à ce premier cylindre et des moyens de fixation de la bande en plastique 2 en un point T2 tangent au premier cylindre 3, les deux points tangents T1 et T2 faisant un angle α constant entre eux quand ils sont pris par rapport au centre du premier cylindre 3. Le document est par exemple préalablement stocké dans un magasin 5 puis amené au premier point tangent T1 précité par un guide 6.

Le premier cylindre 3 possède par exemple une vitesse de rotation continue et constante. Les moyens de fixation sont par exemple des moyens de chauffage constitués d'une pièce métallique 4 chauffée par une résistance électrique, la température de la pièce métallique étant par exemple régulée à un niveau donné. Les mouvements ou l'activation des moyens de chauffage 4 sont réglés de façon que quand un point donné du document passe au niveau du deuxième point tangent T2, ces moyens de chauffage 4 fixent le document sur la bande 2 en ce point donné par la chaleur qu'ils dégagent sur cette bande 2 en ce point. Connaissant la vitesse du premier cylindre 3 et l'instant où le document commence à s'enrouler sur le cylindre, il est possible de régler les mouvements ou l'activation des moyens de chauffage pour qu'ils fixent le document au point voulu. Selon un mode de réalisation possible de l'invention, les moyens de chauffage 4, des pièces métalliques chauffées par exemple, sont par exemple fixés sur un deuxième cylindre 7 tournant par exemple à la même vitesse que le premier cylindre 3, de façon à chauffer la bande en plastique 2 au niveau du deuxième point tangent T2 lorsque le point donné du document au niveau duquel doit être réalisé la fixation passe sur ce deuxième point tangent T2. Si plusieurs points de fixations doivent être réalisés, le deuxième cylindre peut contenir par exemple plusieurs moyens de chauffage 4 sur sa périphérie. Tournant à la même vitesse que le premier cylindre, il peut aussi supporter plusieurs moyens de chauffage si plusieurs documents sont enroulés autours du premier cylindre, le nombre de moyens de chauffage 4 étant égal au nombre de documents situés entre ces deux points. Si un nombre N de documents sont situés par exemple sur toute la périphérie du premier cylindre, régulièrement répartis, le deuxième cylindre ne possédant par exemple qu'une pièce métallique chauffée, peut tourner à une vitesse N fois supérieure à celle du premier cylindre. Dans tous les cas, la position angulaire initiale du deuxième cylindre doit être bien définie par rapport au deuxième point tangent T2 d'une part, et les vitesses angulaires relatives des deux cylindres 3, 7 doivent être bien définies entre elles d'autre part. Elles sont donc fonctions l'une de l'autre.

En effet, les vitesses précédentes étant ainsi définies, il en résulte que le point de fixation du document sur la bande 2 est bien défini, le réglage de la position initiale du deuxième cylindre étant alors fonction par exemple du point de fixation choisi sur le document.

Les moyens de fixation constitués à titre d'exemple par les moyens de chauffage 4 pourraient aussi être constitués notamment de moyens de collage.

Lorsque le document atteint le premier cylindre 3 au premier point tangent T1, le document est par exemple attaché au premier cylindre 3 par un taquet. Il est par exemple maintenu plaqué sur la surface du premier cylindre 3 par un système d'aspiration. A cet effet, la surface du cylindre est par exemple constituée d'un certain nombre de trous où aboutissent des conduits d'aspiration créant le vide là où ils sont recouverts du document. Ces mêmes conduits servent par exemple à déposer le document sur la bande 2 en remplaçant l'aspiration par le soufflage d'air. Ce soufflage peut aussi servir à refroidir le premier cylindre 3 chauffé par les moyens de fixation ou lui ôter des macules par exemple.

La bande en plastique 2 est par exemple préalablement enroulée autour d'un troisième cylindre 8 à partir duquel elle est ensuite déroulée.

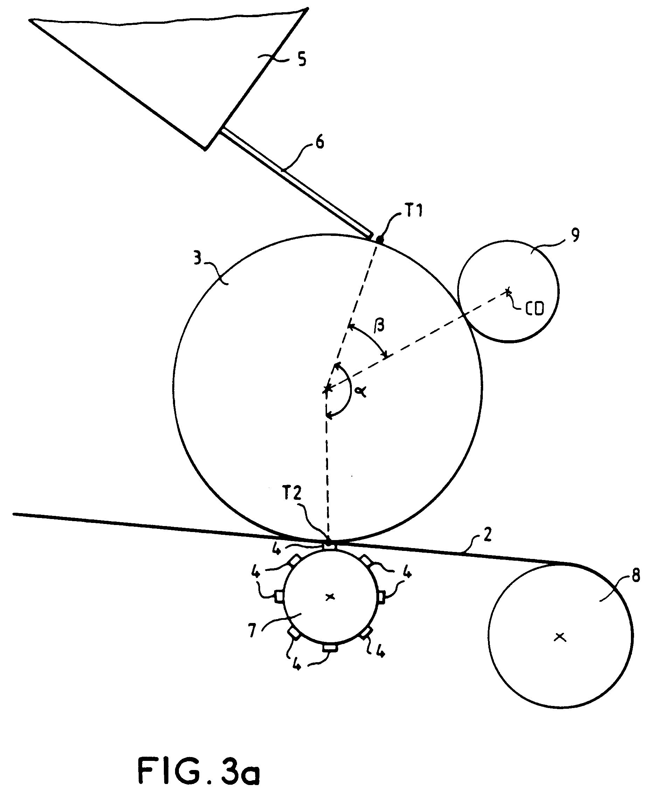

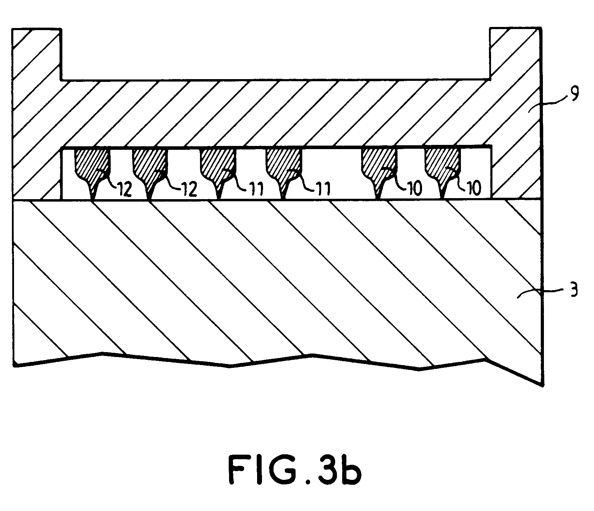

La figure 3a présente un autre mode de réalisation possible d'un dispositif selon l'invention appliquée notamment à un cas où un ou plusieurs documents sont pré-imprimés sur une feuille, le ou les documents devant être découpés dans la feuille. Aux précédents cylindres 3, 7 est associé un cylindre de découpe 9 dont une vue en coupe est présentée en figure 3b. Sur cette vue, il est représenté au contact du premier cylindre 3, lui aussi représenté en coupe.

Le centre CD du cylindre de découpe 9 fait par exemple un angle β constant avec le premier point tangent T1.

Le cylindre de découpe 9 possède au moins une ligne de découpe 10, représentée en coupe pour découper des documents imprimés sur une feuille enroulée autour du premier cylindre 3 à partir du premier point tangent T1, la position des documents imprimés étant bien définie par rapport au premier bord de la feuille rencontrant ce point tangent T1. La découpe du document est réalisée par pression du cylindre de découpe 9 sur le premier cylindre 3, et plus précisément par pression de la ligne de découpe 10 sur la feuille. La ligne de découpe 10 est par exemple constituée de filets en acier aux terminaisons saillantes. Si la feuille contient plusieurs rangées de documents à découper, puis à plastifier, le cylindre de découpe 9 contient alors par exemple autant de lignes de découpe 10, 11, 12 que de rangées, trois par exemple.

Les vitesses de rotation du premier cylindre 3 et du cylindre de découpe 9 sont synchronisées de façon à ce que la ligne de découpe coupe les documents aux bons endroits, leurs positions initiales respectives étant par ailleurs bien définies. Le rapport des vitesses est aussi réglé de façon à ce que les documents compris sur une même feuille et sur une même rangée soient découpés dans un même tour de cylindre. Par exemple, si les formats respectifs des feuilles sur lesquels sont imprimés les documents et du premier cylindre 3 permettent de placer sur celui-ci un nombre K de feuilles pour chacun de ses tours et si chaque feuille contient dans chaque rangée un nombre M de documents, le cylindre de découpe 9 tourne KxM plus vite que le premier cylindre 3. Cependant, les vitesses tangentielles des deux cylindres sont par exemple sensiblement identiques au niveau de leurs circonférences respectives. Pour couper les documents aux bons endroits des feuilles, il faut que la position de la ligne de découpe du cylindre de découpe 9 soit bien définie par rapport à l'instant où les feuilles commencent à s'enrouler sur le premier cylindre 3. A cet effet les vitesses de rotation des deux cylindres 3, 9 peuvent être par exemple discontinues, le premier cylindre s'arrêtant avant de recevoir une feuille. Puis celle-ci étant en butée au niveau du premier point tangent T1, le premier cylindre tourne de nouveau quand la position angulaire du cylindre de découpe atteint une position donnée, cette position étant définie de manière à ce que les documents soient coupés aux bons endroits de la feuille compte tenu des vitesses respectives des cylindres 3, 9.

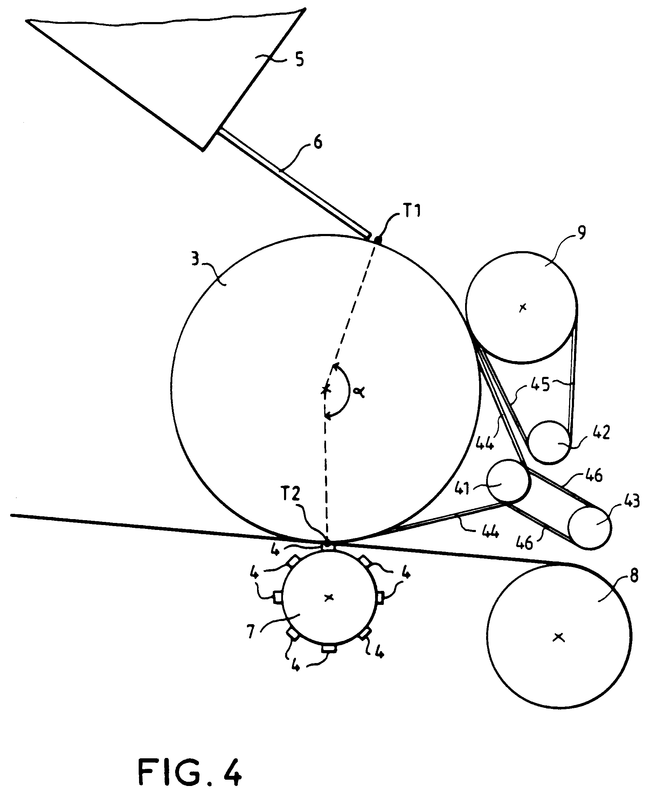

La figure 4 présente le mode de réalisation de la figure 3 augmenté de moyens d'extraction du squelette de chaque feuille du premier cylindre 3, pour éviter notamment que ce squelette viennent gêner la plastification des documents découpés, le squelette étant la partie restante de chaque feuille après découpe. Ces moyens d'extraction sont par exemple constitués d'un jeu de cylindre 41, 42, 43 et de séries de courroies 44, 45, 46. Un premier cylindre d'extraction 41 entraîne une première série de courroies 44 logées par ailleurs dans des gorges du premier cylindre 3. Ces gorges sont situées de manière à ce que les courroies parallèles entre elles, de la première série 44, se trouvent en dessous de zones non imprimées donc destinées à faire partie du squelette de chaque feuille. Le premier cylindre d'extraction est positionné de façon à ce que les courroies 44 s'éloignent du premier cylindre 3 juste après la découpe des documents par exemple, cela permet alors d'éloigner de ce premier cylindre 3 le squelette de chaque feuille. Pour éviter que les documents découpés soient entraînés par le squelette et ainsi se détachent du premier cylindre 3, notamment en cas de coupure non totalement établie sur toute la périphérie des documents, une deuxième série de courroies 45 se superpose aux documents après leur découpe de façon à maintenir ces derniers sur le premier cylindre. Les courroies sont entraînées par le cylindre de découpe 9 et par un deuxième cylindre d'extraction 42, celui-ci étant positionné de façon à ce que les courroies de la deuxième série 45 maintiennent convenablement les documents en sortie de découpe. Si chaque feuille contient une seule rangée de document, cette deuxième série contient par exemple une seule courroie. En option, une troisième série de courroies 46 éloigne par exemple les squelettes de la première série de courroies, les courroies de cette troisième série 46 étant entraînées par le premier cylindre d'extraction 41 et par un troisième cylindre d'extraction 43.

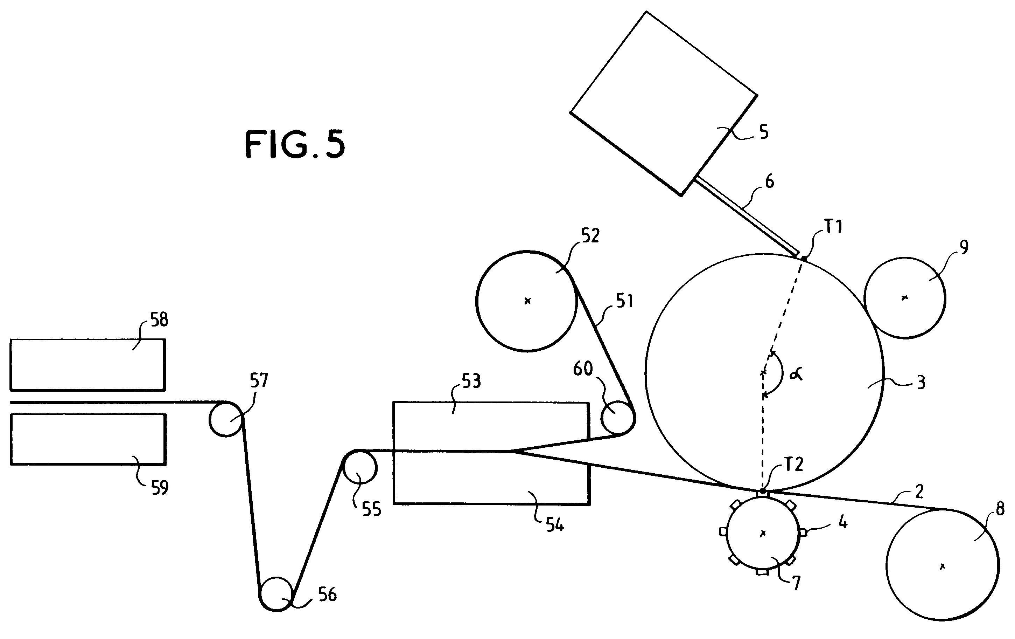

La figure 5 présente un dispositif selon l'invention réalisé selon un mode illustré par les figures précédentes et associé par exemple à un ensemble de plastification et de découpe des documents plastifiés, les moyens d'extraction des squelettes n'ayant pas été représentés.

Une deuxième bande en plastique 51 se déroule d'un cylindre 52 pour se superposer à la première bande en plastique 2 et aux documents préscellés sur cette première bande 2, au niveau des moyens de plastification 53, 54 constitués par exemple de deux parties chauffantes 53, 54. Chacune des parties chauffe une des bandes 2, 51 afin de les fixer sur les documents. Un cylindre 60 intercalé par exemple entre le cylindre 52 à partir duquel se déroule la deuxième bande 51 et les moyens de plastification 53, 54 détourne cette deuxième bande 51 pour lui permettre de rentrer dans les moyens de plastification tangentiellement à la première bande 2. En sortie des moyens de plastification 53, 54, les deux bandes en plastique et les documents sont détournés par un jeu de trois cylindres 55, 56, 57 vers des moyens de découpage 58, 59. Ces derniers découpent les documents plastifiés. lls sont par exemple constitués d'un poinçon 58 s'engageant dans une matrice de découpe 59. lls comprennent plusieurs poinçons si plusieurs documents plastifiés sont découpés simultanément. En jouant sur la position d'un des trois cylindres 55, 56, 57 précités, il est possible de régler la position des documents par rapport à la ligne de découpe des moyens de découpage 58, 59.

Le préscellage des documents sur la première bande en plastique 2 permet à ceux-ci de conserver une position fixe sur celle-ci jusqu'à leur entrée dans les moyens de plastification 53, 54.

En cas de changement de format des documents ou des feuilles sur lesquelles ils sont imprimés, il est possible de ne rien changer au dispositif selon l'invention excepté de remplacer le premier cylindre 3 par un autre cylindre de taille adaptée et de régler la position des autres parties du dispositif par rapport à ce nouveau cylindre.

Un système de découpe analogue à celui comprenant le premier cylindre 3 et le cylindre de découpe 9 peut par exemple remplacer le système 58, 59 de découpe des cartes plastifiées décrit précédemment.

## Revendications

1. Dispositif de préscellage d'un document sur une bande en plastique (2), caractérisé en ce qu'il comprend au moins :
- un premier cylindre (3) sur lequel s'enroule le document à partir d'un premier point donné (T1) de l'espace tangent au cylindre (3);
- des moyens de fixation (4) de la bande en plastique (2) en un deuxième point tangent (T2) au cylindre où la bande en plastique (2) est en contact avec le document, ce point tangent (T2) faisant un angle constant (α) avec le point donné (T1) de l'espace, le document étant préscellé par la fixation de la bande en plastique en ce deuxième point tangent (T2).

2. Dispositif selon la revendication 1, caractérisé en ce que les moyens de fixation (4) sont des moyens de chauffage de la bande en plastique (2), le document étant préscellé par le chauffage de la bande en plastique au niveau du deuxième point tangent (T2).

3. Dispositif selon la revendication 2, caractérisé en ce que les moyens de chauffage sont constitués au moins d'une pièce métallique chauffante (4) fixée sur un deuxième cylindre (7) et chauffant la bande en plastique (2) lors de son passage au niveau du deuxième point tangent (T2), la position angulaire du deuxième cylindre (7) étant préalablement définie, et les vitesses angulaires du premier (3) et du deuxième (7) cylindres étant fonction l'une de l'autre.

4. Dispositif selon la revendication 3, caractérisé en ce que le premier (3) et le deuxième (7) cylindres tournant à la même vitesse, le deuxième cylindre (7) comporte autant de pièces métalliques chauffantes qu'il y a de documents à présceller par tour et par rangée du premier cylindre (3).

5. Dispositif selon l'une quelconque des revendications précédentes, caractérisé en ce que le document étant imprimé sur une feuille, la feuille s'enroulant sur le premier cylindre (3) à partir du premier point tangent (T1), un cylindre de découpe (9) découpe le document par pression sur le premier cylindre (3), le cylindre de découpe (9) comportant une ligne de découpe (10, 11, 12) qui est alors pressée sur la feuille.

6. Dispositif selon la revendication 5, caractérisé en ce que le centre (CD) du deuxième cylindre (9) fait un angle (β) constant avec le premier point tangent (T1).

7. Dispositif selon l'une quelconque des revendications 5 ou 6, caractérisé en ce que la vitesse angulaire du cylindre de découpe (9) est sensiblement multiple de la vitesse angulaire du premier cylindre (3).

8. Dispositif selon l'une quelconque des revendications 5 à 7, caractérisé en ce qu'il comporte des moyens d'extraction du squelette de la feuille, les moyens d'extraction étant constitués d'un jeu de cylindres d'extractions (41, 42, 43) et de séries de courroies (44, 45, 46), au moins une première série de courroies (44) logées dans le premier cylindre et entraînées par un premier cylindre d'extraction (41) éloignant le squelette du premier cylindre (3) et une deuxième série de courroies (45) entraînées par le cylindre de découpe et un deuxième cylindre d'extraction (42) maintenant le document découpé sur le premier cylindre (3).

9. Dispositif selon la revendication 8, caractérisé en ce que les moyens d'extraction comportent en outre un troisième cylindre d'extraction (43) et une troisième série de courroies (46) pour éloigner le squelette de la première série de courroies (44), les courroies de la troisième série (46) étant entraînées par le deuxième (41) et le troisième (43) cylindres d'extraction.

10. Dispositif selon l'une quelconque des revendications précédentes, caractérisé en ce qu'il est associé à des moyens de plastification (53, 54) et de découpage (58, 59) de documents plastifiés, les moyens de plastification chauffant la bande (2) sur laquelle sont préscellés les documents.

## Claims

1. Device for presealing a document onto a web of plastic (2), characterized in that it comprises at least:
- a first roll (3) around which the document runs from a first given point (T1) in the space tangent to the roll (3);
- means (4) for fixing the web of plastic (2) at a second point (T2) tangent to the roll where the web of plastic (2) is in contact with the document, this tangent point (T2) making a constant angle (α) with the given point (T1) in the space, the document being presealed by fixing it to the web of plastic at this second tangent point (T2).

2. Device according to Claim 1, characterized in that the fixing means (4) are means for heating the web of plastic (2), the document being presealed by heating the web of plastic in the region of the second tangent point (T2).

3. Device according to Claim 2, characterized in that the heating means consist of at least one metal heating element (4) which is fixed to a second roll (7) and heats the web of plastic (2) as it passes through the region of the second tangent point (T2), the angular position of the second roll (7) being defined beforehand and the angular speeds of the first (3) and second (7) rolls being dependent on each other.

4. Device according to Claim 3, characterized in that, with the first (3) and second (7) rolls rotating at the same speed, the second roll (7) has as many metal heating elements as there are documents to be presealed per revolution and per row of the first roll (3).

5. Device according to any one of the preceding claims, characterized in that, the document being printed on a sheet and the sheet running around the first roll (3) from the first tangent point (T1), a cutting roll (9) cuts the document by pressing on the first roll (3), the cutting roll (9) having a cutting line (10, 11, 12) which is then pressed against the sheet.

6. Device according to Claim 5, characterized in that the centre (CD) of the second roll (9) makes a constant angle (β) with the first tangent point (T1).

7. Device according to either of Claims 5 and 6, characterized in that the angular speed of the cutting roll (9) is approximately a multiple of the angular speed of the first roll (3).

8. Device according to any one of Claims 5 to 7, characterized in that it includes means for extracting the skeleton of the sheet, the extraction means consisting of a set of extraction rollers (41, 42, 43) and of series of belts (44, 45, 46), at least one first series of belts (44), which are housed in the first roll and driven by a first extraction roller (41), removing the skeleton from the first roll (3) and a second series of belts (45), which are driven by the cutting roll, and a second extraction roller (42) holding the cut document against the first roll (3).

9. Device according to Claim 8, characterized in that the extraction means furthermore include a third extraction roller (43) and a third series of belts (46) in order to remove the skeleton from the first series of belts (44), the belts of the third series (46) being driven by the second (41) and third (43) extraction rollers.

10. Device according to any one of the preceding claims, characterized in that it is coupled to means (53, 54) for coating documents with plastic and with means (58, 59) for cutting the plastic-coated documents, the plastic-coating means heating the web (2) onto which the documents are presealed.

## Patentansprüche

1. Vorrichtung zum Vor-Fixieren eines Dokuments auf einem Kunststoffband (2), dadurch gekennzeichnet, daß sie mindestens aufweist:
- einen ersten Zylinder (3), auf dem sich das Dokument ausgehend von einem ersten gegebenen Raumpunkt (T1) abrollt, der den Zylinder (3) berührt,
- Fixierungsmittel (4) für das Kunststoffband (2) in einem zweiten den Zylinder tangierenden Punkt (T2), in dem das Kunststoffband (2) mit dem Dokument in Kontakt steht und der einen konstanten Winkel (α) mit dem gegebenen Raumpunkt (T1) einschließt, wobei das Dokument durch die Fixierung des Kunststoffbandes in diesem zweiten tangierenden Punkt (T2) festgelegt wird.

2. Vorrichtung nach Anspruch 1, dadurch gekennzeichnet, daß die Fixierungsmittel (4) Heizmittel für das Kunststoffband (2) sind und daß das Dokument durch Erwärmung des Kunststoffbandes in Höhe des zweiten tangierenden Punkts (T2) festgelegt wird.

3. Vorrichtung nach Anspruch 2, dadurch gekennzeichnet, daß die Heizmittel von mindestens einem metallischen Heizelement (4) gebildet werden, das auf einem zweiten Zylinder (7) befestigt ist und das Kunststoffband (2) bei seinem Durchgang durch den zweiten tangierenden Punkt erwärmt, wobei die Winkelstellung des zweiten Zylinders (7) vorab definiert ist und die relativen Winkelgeschwindigkeiten des ersten Zylinders (3) und des zweiten Zylinders (7) voneinander abhängen.

4. Vorrichtung nach Anspruch 3, dadurch gekennzeichnet, daß, wenn der erste Zylinder (3) und der zweite Zylinder (7) mit gleicher Geschwindigkeit drehen, der zweite Zylinder (7) ebensoviele metallische Heizelemente enthält, wie es je Umdrehung und je Gruppe des ersten Zylinders (3) zu versiegelnde Dokumente gibt.

5. Vorrichtung nach einem beliebigen der vorstehenden Ansprüche, dadurch gekennzeichnet, daß, wenn das Dokument auf einen Bogen aufgedruckt ist, der auf dem ersten Zylinder (3) ausgehend vom ersten tangierenden Punkt (T1) abrollt, ein Schneidezylinder (9) das Dokument durch Druck auf den ersten Zylinder (3) zerschneidet, wobei der Schneidezylinder (9) eine dann auf den Bogen drückende Schneidelinie besitzt.

6. Vorrichtung nach Anspruch 5, dadurch gekennzeichnet, daß das Zentrum (CD) des zweiten Zylinders (9) einen konstanten Winkel (β) mit dem erste tangierenden Punkt (T1) einschließt.

7. Vorrichtung nach einem der Ansprüche 5 und 6, dadurch gekennzeichnet, daß die Winkelgeschwindigkeit des Schneidezylinders (9) im wesentlichen ein Vielfaches der Winkelgeschwindigkeit des ersten Zylinders (3) ist.

8. Vorrichtung nach einem beliebigen der Ansprüche 5 bis 7, dadurch gekennzeichnet, daß sie Mittel zur Entfernung des Skeletts des Bogens enthält, die von einem Satz von Skelettentfernungszylindern (41, 42, 43) und von Gruppen von Riemen (44, 45, 46) gebildet werden, wobei mindestens eine erste Gruppe von Riemen (44), die im ersten Zylinder verlaufen und von einem ersten Skelettentfernungszylinder (41) angetrieben werden, das Skelett vom ersten Zylinder (3) entfernen, während eine zweite Gruppe von Riemen (45), die vom Schneidezylinder und einem zweiten Skelettentfernungszylinder (42) angetrieben werden, das ausgeschnittene Dokument auf dem ersten Zylinder (3) festhalten.

9. Vorrichtung nach Anspruch 8, dadurch gekennzeichnet, daß die Mittel zur Entfernung des Skeletts außerdem einen dritten Skelettentferungszylinder (43) und eine dritte Gruppe von Riemen (46) enthalten, um das Skelett von der ersten Gruppe von Riemen (44) zu entfernen, wobei die Riemen der dritten Gruppe (46) durch den zweiten und den dritten Skelettentferungszylinder (41, 43) angetrieben werden.

10. Vorrichtung nach einem beliebigen der vorstehenden Ansprüche, dadurch gekennzeichnet, daß sie mit Mittels (53, 54) zur Versiegelung und Mitteln (58, 59) zum Ausschneiden der versiegelten Dokumente zusammenwirkt, wobei die Versiegelungsmittel das Band (2), auf dem die Dokumente vor-fixiert sind, erwärmen.
